# EUROPEAN PATENT APPLICATION

(11) **EP 0 532 247 A2**
(43) Date of publication of application: **17.03.1993**
(21) Application number: 92308085.7
(22) Date of filing: 07.09.1992
(51) Int. Cl.: G11B 17/035, G11B 17/04, G11B 23/03

(54) **Recording/playback apparatus**

(30) Priority: 10.09.1991 US 757423
(71) Applicant: International Business Machines Corporation, Armonk, N.Y. 10504 (US)
(72) Inventor: McReynolds, David Paul, Tucson, Arizona 85749 (US); Schmitt, Thomas James, Tucson, Arizona 85749 (US); Shafaat, Syed Tariq, Clinton, Washington 98236 (US); Yardy,Raymond (NMI), Tucson, Arizona 85715 (US)
(74) Representative: Burt, Roger James, Dr.

(57) **Abstract**

Recording/playback apparatus includes a base 9 with an upwardly biased movable datum locating pin 30. The pin 30 is held down by a lip 205 on a catch 204 to allow a cartridge 8 to be inserted into a tray 70 above the base 9. The edge 14 of the cartridge strikes a tab 201 on an arm 200 and the lip 205 is released from the pin 30 to allow it to be biased into a datum locating hole 10 in the cartridge. A drive plate 80 is then moved in a direction opposite to the arrow A to pivot bell crank levers supporting the tray 70 on pins 41 and 42 to lower the cartridge 8 and engage a contained disk on a spindle therefor. Upon insertion of the cartridge into the tray 70, the pin 30 is released to move into the datum hole 10 in the cartridge when the hole is positioned directly above the pin. The cartridge is then lowered onto the drive spindle and positioned on datum surfaces on the base and pin. During the load cycle, the cartridge is allowed to move relative to the holding tray while continuing to be held in place relative to the base by the datum pin.

## Description

This invention relates to recording/playback apparatus for use with standard protective cartridges.

The American National Standards Institute (ANSI) has developed standard dimensions for cartridges holding recording media. Thus the manufacturers of cartridges and the manufacturers of recording/playback apparatus (drives) have the ability to develop their respective products for use with a variety of other manufacturers' products. The standard cartridge includes datum features, for example, locating holes, that are designed to **mate** with datum features in a drive, for example locating pins, to position accurately the cartridge within the drive. Holding features in the cartridge such as notches and recesses, are dimensioned relative to the datum features. After insertion of a cartridge into a drive, the notches are typically used to hold the cartridge while it is loaded onto the drive spindle and simultaneously loaded onto the locating pins.

The front and side edges of the standard cartridge are held to a tight tolerance relative to the locating holes, the datum features of the cartridge, whereas holding features for example, notches and recesses, located in the sides of the cartridge, are less tightly toleranced. For that reason, wear of the locating holes and cartridge hub occurs during loading as the cartridge is moved onto the locating pins.

Holding of the cartridge within the drive is typically accomplished before the loading operation by mating holding notches in the exterior case of the cartridge with corresponding features in the inside surfaces of a holding tray or sleeve. Thus, holding and positioning of the cartridge is accomplished prior to the motion to load the cartridge into a mating relationship with the spindle. Such a design may inaccurately position the locating holes of the cartridge relative to the locating pins and the hub of the cartridge and the spindle relative to each other, dependent on tolerances in the cartridge case, the holding tray, the tray bushings, and the base plate. As a result, the loading operation may forcibly reposition the cartridge on the locating pins and the spindle thus wearing the hub and the locating holes and may result in jamming of the load mechanism.

The present invention seeks to provide an apparatus for holding the cartridge before and during the loading operation by means of locating pins inserted into the locating holes as well as using the locating pins and holes to position the cartridge within the drive after loading is accomplished.

The present invention also seeks to position repeatedly and hold the cartridge in a manner which minimises wear on the locating holes as well as on the hub within the cartridge upon which the media is mounted. In that manner, the life of the cartridge, that is the number of loads which the cartridge can withstand before wearing out, is substantially increased.

The present invention seeks to eliminate the buildup of tolerances and to accomplish a reduction or elimination of tolerances associated with the tray, loader arms, drive plate, base casting and spindle motor. Also, by accurately positioning the cartridge relative to the locating pins before lowering the cartridge, wear on the hole is minimised. Finally, by accurately positioning the cartridge before loading it on the spindle, wear on the cartridge hub is minimised.

This invention provides mechanisms within a recording/playback apparatus to locate and hold a standard cartridge within the apparatus before, during, and after a load cycle by means of a movable locating pin positioned within a receptacle in a base casting. The cartridge is positioned with its locating hole directly above the locating pin before the locating pin is allowed to move into the locating hole. The load cycle is not allowed to commence until the cartridge is positioned on the locating pin. During the load cycle, the cartridge is allowed to slide relative to the holding tray while continuing to be held in place relative to the base casting by means of the locating pin.

The scope of this invention is defined by the appended claims; and how it can be carried into effect is hereinafter particularly described with reference to the accompanying drawings in which:-
Figure 1 is a perspective view of a standard ANSI cartridge together with a typical spindle motor;
Figure 2A is an isometric view of a base for recording/playback apparatus according to the invention designed for use with the standard cartridge of Figure 1; and Figure 2B is a sectional view of the locating pin and bushing assembly in the base of Fig. 2A;
Figure 3 is a perspective view of the front exterior face of the recording apparatus;
Figure 4 is a perspective view of a holding tray located within the recording/playback apparatus according to the invention for receiving the cartridge of Fig. 1;
Figure 5 is a perspective view of a drive plate located within the playback apparatus on the base of Figure 2A;
Figure 6 is a side assembly view of the locating mechanisms of this invention positioned on the base of Fig. 2A;
Figure 7 is a side view similar to Fig. 6, with the locating pin inserted into the locating hole of the cartridge to locate the cartridge within the playback apparatus;
Figure 8 is side view similar to Fig. 7, showing the cartridge lowered in place within the playback apparatus;
Figure 9 is an exploded view of the locating and holding mechanisms of this invention;
Figure 10A is an assembled view of part of the mechanism of Fig. 9 with the locating pin in one position; and
Figure 10B is a view similar to Fig. 10A, with the pin in another position.

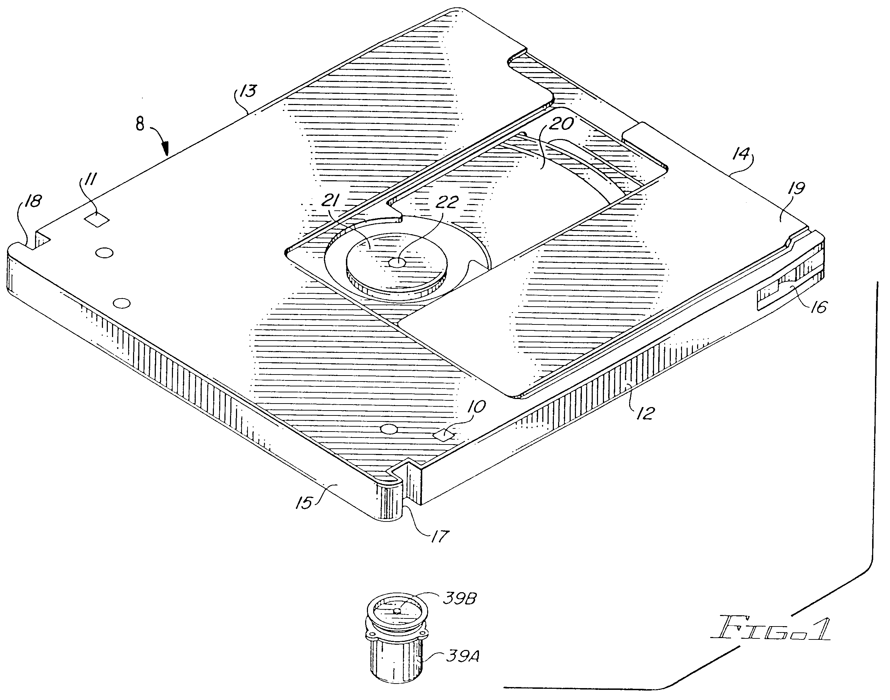

A standardised ANSI cartridge 8 (Fig. 1) contains locating datums in the form of locating holes 10 and 11. Side edges 12 and 13, front edge 14 and rear edge 15 are held to a tight tolerance with respect to locating holes 10 and 11. The cartridge also contains gripper slots or notches 17 and 18 in side edges 12 and 13 near the front edge 15 and holding detents 16 (only one of which is visible) in side edges 12 and 13 near the rear edge 14. Many systems use either the holding datums 16 or the gripper slots 17 and 18 to hold the cartridge within a holding tray while it is loaded onto a motor spindle and onto locating pins.

The cartridge 8 also has a shutter door 19 opened to expose a media disk 20 inside the cartridge and a hub 21 upon which the media disk 20 is mounted. A drive spindle 39B is inserted through a centre hole 22 of hub 21 when the cartridge is lowered into position onto a drive spindle motor 39A.

As the holding features 16, 17 and 18 are different from the locating datums 10 and 11, one of the common problems associated with holding the cartridge in place is a tolerance buildup between the locating datums and the holding features in the cartridge. As a result, the locating pins in the drive may sometimes need to be forced into the locating holes 10 and 11. This in turn causes excessive wear in the locating holes in the cartridge which ultimately causes the cartridge to slip as the loader moves the cartridge onto the spindle 39B of the spindle motor 39A. In that manner centre hole 22 of the hub 21 is worn and wear particles may contaminate components in the drive. Basically, the problem is that the holding features are not adequate to hold the cartridge in position to mate reliably with locating pins over a large number of loading operations.

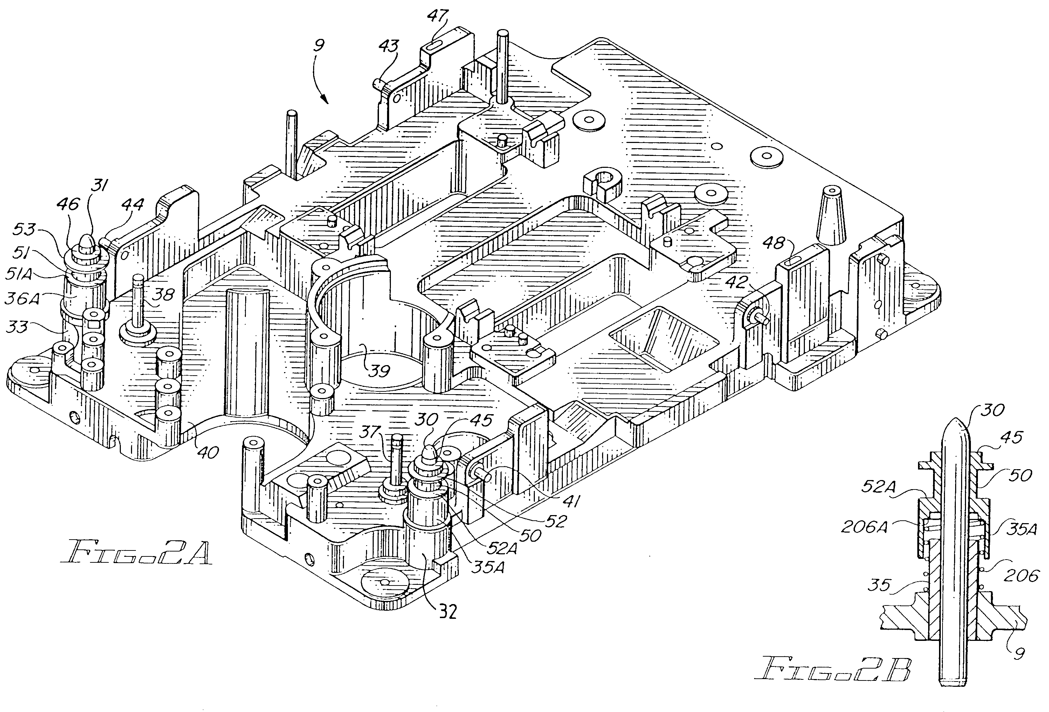

Playback apparatus incorporating this invention includes a base 9 (Fig. 2A) which is preferably cast. Locating pins 30 and 31 are mounted in bushings 35 (Fig. 2B) which in turn are held in receptacles 32 and 33 (Fig. 2A) which are an integral part of the base 9. One or both of the locating pins 30 and 31 is or are made movable to move into the locating holes 10 and 11 (Fig. 1) of the cartridge. To facilitate entry of pins 30 and 31 into the locating holes 10 and 11, their heads have a bullet head shaped profile. To facilitate longitudinal movement of the locating pins in the base 9, bushings 35 are inserted into the receptacles 32 and 33 of the base casting with the locating pins 30 and 31 mounted within the bushings.

Pins 37 and 38 mounted in the base 9 are used to mount portions of the mechanisms which control motion of the locating pins 30 and 31. Pins 30, 31, 37 and 38 extend upwardly from base 9.

The base 9 has a central space 39 into which the spindle motor (not shown) is placed and fastened to the base. The base casting 9 also contains a space 40 into which is placed and mounted a motor for lowering the cartridge onto the spindle motor and raising it therefrom.

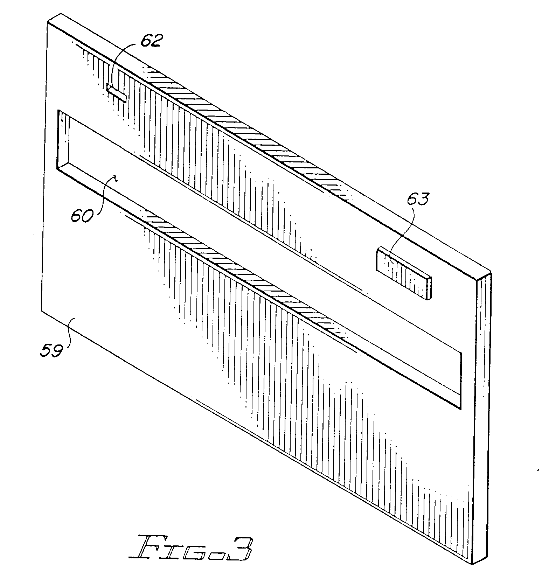

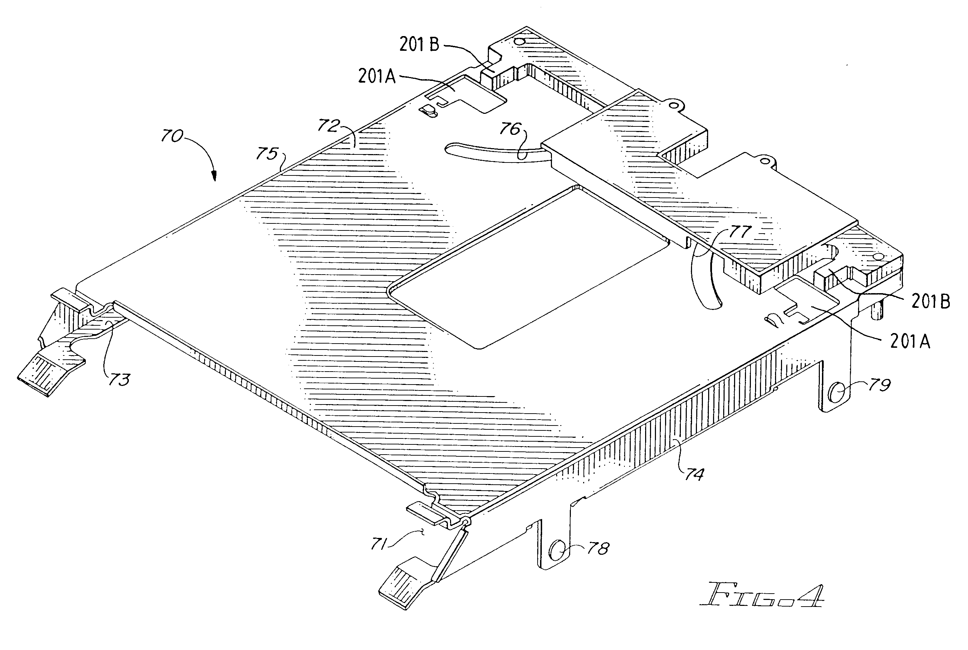

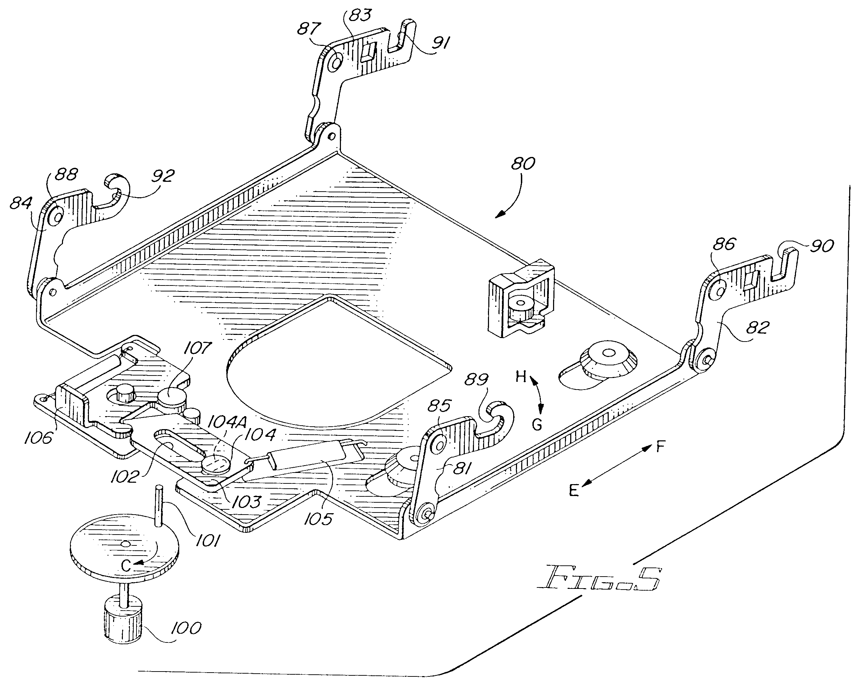

Pins 41, 42, 43, and 44 extend outwardly from two sides of the base 9. These pins are used for mounting arms which are connected to a drive plate (Fig. 5) and to a tray (Fig. 4). The tray receives the cartridge when it is inserted into the drive apparatus.

The locating pin 30 (Fig. 2B) positioned in bushing 35 has an attached skirt 35A pressed thereonto. A spring 206 acts to bias the pin 30 upwardly. When the pin 30 is fully depressed against the bias of the spring 206, an internal surface 206A on the skirt 35A engages the top of the bushing 35. The skirt 35A has a top surface 45 and an annular recess 50 thereunder. The recess 50 has a lower upward facing surface 52A.

The pin has a skirt 36A similar to skirt 35A and is spring-biased upwardly in the same manner as pin 30. The skirt 36A has a top surface 46, and an annular recess 51 with a lower upward facing surface 51A.

The base 9 has two reference surfaces 47 and 48 near pins 43 and 42.

When a cartridge 8 is loaded onto the spindle motor, parts of the bottom surface of the cartridge are brought solidly against the two reference surfaces 47 and 48 which are part of the base. Other parts of the bottom surface of the cartridge engage the two surfaces 45 and 46 on the skirts 35A and 36A on the locating pins 30 and 31. The locating pins 30 and 31 are depressed to engage the skirts solidly against bushings 35 in the base 9 when the cartridge is fully loaded into the playback apparatus. Thus four solid surfaces 45, 46, 47 and 48 mount the cartridge in the recording/playback position.

Playback apparatus incorporating the invention has a front face 59 (Fig. 3) with an entrance opening 60 through which a cartridge 8 may be inserted. There are also an opening 62 for accepting a "drive busy" indicator such as a light emitting diode (LED), and an eject button 63.

The apparatus also includes a holding tray 70 (Fig. 4) for receiving a cartridge inserted into the apparatus. Such insertion may be accomplished manually or by insertion apparatus such as might be present in an automatic library device. The tray 70 has a top surface 72, side surfaces 74 and 75 and bottom ledges 73 to form an opening 71. Slots 76 and 77 in the top surface 72 accommodate arms (not shown) which open the shutter door 19 of a cartridge 8 containing disk media upon insertion of such a cartridge into the tray.

On each side of tray 70 are two dependent arms with pins 78 and 79 for attachment to arms (not shown).
A drive plate 80 (Fig. 5) has arms 81, 82, 83, and 84 pivotally attached thereto. Arms 81, 82, 83 and 84 contain bushings 85, 86, 87 and 88 through which pins 41, 42, 43 and 44 (Fig. 2) are inserted, respectively. In this manner the drive plate 80 is pivotally and accurately positioned relative to and below the base 9. Arms 81, 82, 83 and 84 are similar to bell-crank levers and their free ends contain respective slots 89, 90, 91 and 92. The slots 89 and 92 are similar but differ from slots 90 and 91 which are alike. The pins 78 in the holding tray 70 (Fig. 4) are held in slots 89 and 92. The pins 79 connect into slots 90 and 91. In this manner, the tray 70 is positioned pivotally and accurately at four points with respect to the base 9.

A lowering motor 100 drives an eccentric pin 101 inserted into a slot 102 formed in an overtravel plate 103. Plate 103 is connected to the plate 80 by pin 104. Plate 103 contains a slot 104A, through which a pin 104 passes to connect the plate 103 to the drive plate 80. The plate 103 is biased by spring 105.

A manual unloading latch 106 is pivotally connected by pin 107 to plate 80 to enable manual release of the overhead plate 103.

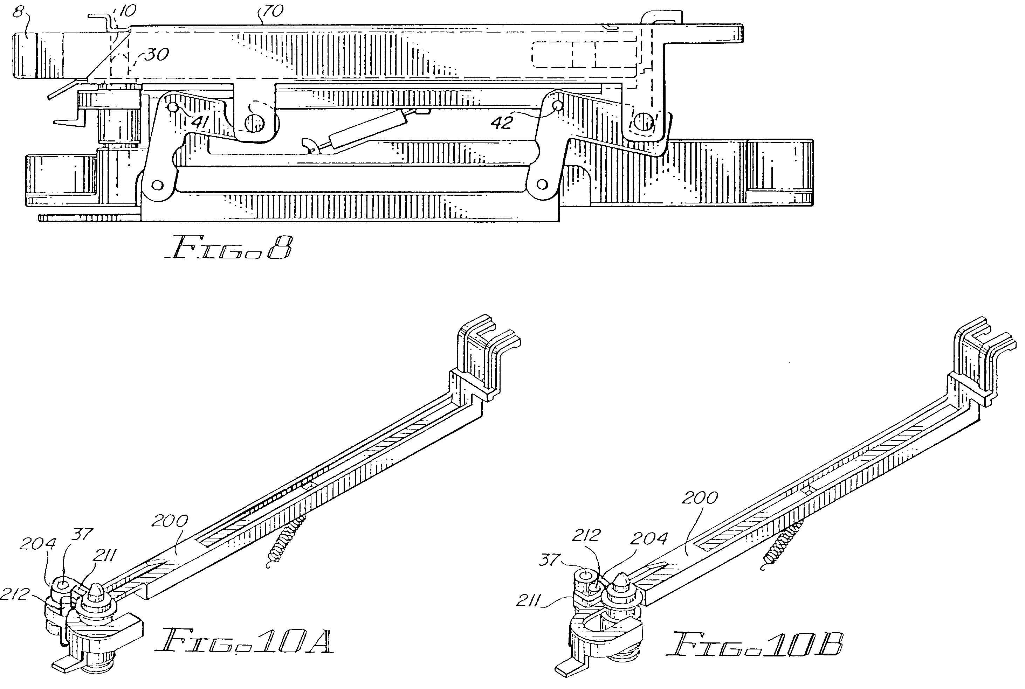

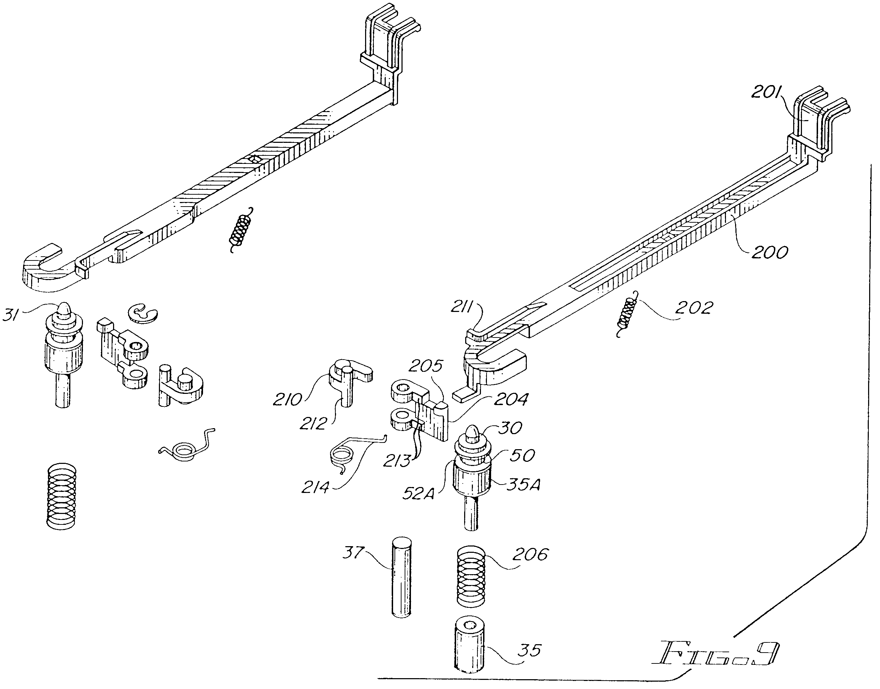

The apparatus also includes two trip arms 200 (Fig. 9), one of which is left-handed and the other right-handed. Each has at one end an upstanding tab 201 which passes upwardly through an over-size hole 201A in the top surface 72 (Fig. 4) of the tray 70 near the dependent arms carrying the pins 79. The ends of the tabs 201 rest upon ledges 201B on the tray 70. At their other ends, the arms 200 (Fig. 9) have open hooks associated respectively with the locating pins 30 and 31. In readiness for use, the trip arms 200 are depressed by tension springs 202. Located on the pin 37 is a catch 204 with a lip 205 and a pair of engagement surfaces 213. A similar catch is mounted on the pin 38. A catch trip 210 with a post 212 is also mounted on the pin 37. A torsion spring 214 on the pin 37 has one end in engagement with the bushing 35 and the other applying clockwise bias to the post 212 of the catch trip 210. A similar catch trip is on pin 38. The arm 200 also has an elongated tab 211 near its hooked end. It will be appreciated that the two arms are used to hold and release the locating pins.

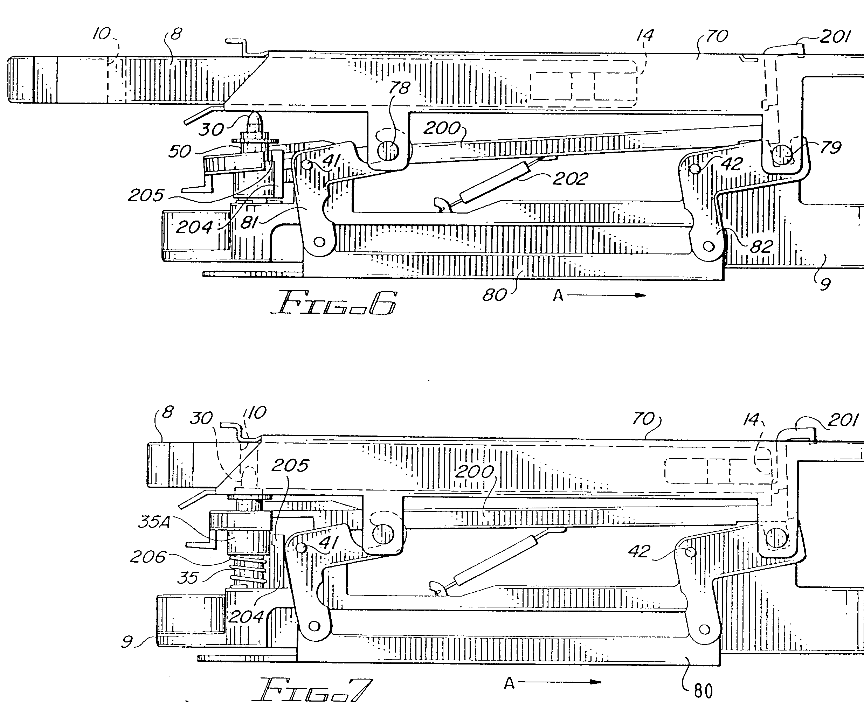

Preparatory to receiving a cartridge 8, the playback apparatus is shown in Figure 6. The tray 70 is raised by the bell crank levers 81 and 82 being pivoted counterclockwise. The hooked end of the arm 200 is depressed by the spring 202. The catch 204 has its lip 205 positioned in the recess 50 in the skirt 35A and in contact with the upward facing surface 52A to hold the skirt 35A and pin 30 down below the tray 70.

The cartridge 8 is inserted into the tray 70 in the direction of the arrow A. The rear face 14 of the cartridge 8 engages the upward tab 201 on the arm 200 and pivots the latter clockwise (Fig. 7). At this time, the hole 10 is aligned above the pin 30. As the arm 200 pivots, the tab 211 engages the post 212 and pivots the catch trip 210 which, in turn, pivots the catch 204 against the bias of the torsion spring 214, thus releasing the trip 205 from the recess 50 in the skirt 35A. This allows the spring 206 to raise the skirt 35A and pin 30 until the surface 45 engages the undersurface of the tray 70, when the pin 30 will be in the hole 10. The distance between the first tab 201 and the second tab 211 determines the trip point for releasing the pin to move to the hole. The hooked end of the arm 200 is positioned in the recess 50 in the skirt 35A, but is in contact with the surface 52A and has space above it in the recess.

The motor 100 is then driven to draw the drive plate 80 in the direction of the arrow E (Fig. 5) so that the bell crank levers 81 and 82 are pivoted clockwise about the pins 41 and 42. This draws the tray 70 down (Fig. 8) pushing down the skirt 35A and pin 30. The catch 204 then pivots so that the trip 205 again enters the recess 50 and engages the surface 52A.

Figure 10A is an assembly view of the trip arm assembly shown in Figure 9 where the cartridge has been inserted to a point where the locating pin has been released to move upwardly into the locating hole in a cartridge. Figure 10B is a similar view of the trip arm assembly before the locating pin is released upwardly. Figures 10A and 10B show the relative positions of the post portion 212 of the catch trip, the tab 211 which is part of the trip arm 200, and the catch 204. The assembly view shows the catch and catch trip mounted on pin 37. Note that with the cartridge fully inserted, Fig. 10A, the tab 211 sits on top of catch trip 210. In Fig. 10B, waiting for a cartridge, tab 211 is in front of catch trip 210.

In the following description, only one trip arm 200 and its associated locating pin 30 will be referred to and it is to be understood that the action of the other trip arm and its associated locating pin 31 is similar and simultaneous.

In operation, a cartridge 8 (Fig. 6) is inserted into tray 70 in the direction of arrow A until the front edge 14 of the cartridge strikes the tab 201 which is moved back by the continued insertion of cartridge 8. As the tab 201 is an integral part of trip arm 200, the latter is also moved and the tab 211 (Fig. 9) which is also an integral part of the trip arm 200, is brought into contact with the post 212 of the catch trip 210. As the cartridge continues to be inserted in the direction of arrow A, tab 211 presses against post 212 (Fig. 10B) compressing torsion spring 214 causing the catch trip 210 to rotate about pin 37 in a counterclockwise fashion pushing the post 212 against the surfaces 213 of catch 204. Catch 204 then rotates around post 37 counterclockwise causing lip 205 to disengage from the surface 52A in the recess 50 of the locating pin 30. Once the lip 205 has disengaged from the locating pin 30, pin 30 is moved upwardly under the influence of spring 206 so that pin 30 is inserted into the locating hole 10 of cartridge 8. When the tab 201 engages the surface 201B (Fig. 4) the cartridge 8 is in position with the hole 10 over the pin 30 (Fig. 7). The dimensions and tolerances of the trip arm 200, the lip 205, the catch 204, and the catch trip 210, are held to a tight tolerance, so that the locating hole 10 will be positioned directly above locating pin 30 when release is accomplished.

In assembly, trip arm 200 is captured within recess 50 so that as the locating pin 30 moves upwardly it carries trip arm 200 with it. As trip arm 200 moves upwardly, tab 211 lifts beyond engagement with post 212, thus freeing catch trip 210 to rotate clockwise under the influence of spring 214. As catch trip 210 rotates, post 212 moves until it is positioned under tab 211 (Fig. 10A), providing a resting place for tab 211. As catch trip 210 rotates clockwise, catch 204 also rotates until lip 205 bears against skirt 35A.

A sensor (not shown) such as a photo sensor, is activated by upward motion of the trip arm 200 to cause the lowering motor 100 (Fig. 5) to operate. As motor 100 turns in the direction of arrow C, eccentric pin 101 bears against the side of slot 102 in overtravel plate 103. Overtravel plate 103 is connected to the drive plate 80 through pin 104 so that drive plate 80 is caused to move in the direction of arrow E. As drive plate 80 moves in the direction of arrow E, arms 81, 82, 83 and 84 rotate around pins 41, 42, 43 and 44 (Fig. 2) in bushings 85, 86, 87 and 88 so that slots 89, 90, 91 and 92 are moved downwardly in an arcuate manner in the direction of arrow G. As the tray 70 is supported in these slots by pins 78 and 79 (Fig. 4), the tray 70 (Fig. 8) is also moved downwardly and arcuately. As tray 70 moves downwardly and arcuately, it carries cartridge 8 with it until the bottom surface of cartridge 8 contacts surfaces 45 and 46 on the skirts 35A and 36A. The pins 30 and 31 are moved downwardly by pressure from the cartridge 8 until the internal surfaces 206A (Fig. 2B) on the skirts 35A and 36A are solidly pressed against bushings 35 and 36. At the same time, the bottom surface of the cartridge 8 contacts the surfaces 47 and 48 on the base 9 (Fig. 2A), thus positioning the cartridge at four points in a solid manner on the base. Overtravel plate 103 (Fig. 5), allows the motor 100 to position the pins and the cartridge solidly against the base casting and provide for a slight amount of motor overtravel by allowing the plate 103 to move forward along a slot 104A relative to pin 104 mounted in the drive plate 80.

As the cartridge 8 is lowered onto the base, the central hole 22 in the hub 21 is brought down directly onto the spindle 39B (Fig. 1) of the drive motor 39A which when activated rotates the media 20 such that the media can be read and written. The spindle motor 39A is positioned in the opening 39 (Fig. 2A) of the base 9. As the spindle motor is positioned accurately with respect to the base, and the cartridge is held accurately with respect to the base by pins 30 and 31 throughout the lowering cycle, the central opening 22 is brought down in an accurate manner onto the spindle so as to produce a minimum of wear on the central opening 22 of hub 21.

The invention enables the location of cartridge 8 within the playback apparatus in an accurate manner relative to the base as the locating pins are held in the base. As the locating pins 30 and 31 remain in locating holes 10 and 11 throughout the lowering motion, cartridge 8 is held accurately in position throughout the lowering cycle.

It should be noted that during the downward movement of pin 30 as the cartridge is lowered into position, torsion spring 214 resets the catch 204 so that the lip 205 re-engages with the recess 50 of skirt 35A, thus holding pin 30 down on the raising cycle.

When it is desired to eject the cartridge from the playback apparatus, an eject button 63 (Fig. 3) is pressed, causing the motor 100 to rotate. Thereupon, eccentric pin 101, inserted in slot 102, bears against the overtravel plate 103, causing drive plate 80 to move in the direction of arrow F (Fig. 5). This in turn causes the slotted bell crank levers to rotate in the direction of arrow H, moving the tray 70 upwardly. As tray 70 moves upwardly, the cartridge 8 is lifted from the base surfaces 45, 46,47 and 48. Locating pins 30 and 31 do not move upwardly as they are once again held in place by lips 205. In that manner the cartridge is allowed to clear the locating pins so that when the shutter arms (not shown) close the shutter door 19, they can partially eject cartridge 8 from the apparatus out through the entrance 60, enabling the user to grasp cartridge 8 and remove the cartridge completely from the playback apparatus either manually or with removal apparatus such as in an automatic library. The springs 202 connected to the trip arms 200, reposition the trip arms to the position shown in Figure 6 upon ejection of a cartridge, thereby resetting all of the mechanisms of the trip arm assembly to a ready position in order to receive the next cartridge.

The invention, as described, has two movable locating pins and two trip arm assemblies. However, pin 31 may, for example, be solidly attached to the base and pin 30 may be the only pin movable upwardly into a locating hole in the cartridge 8 before its descent. Either embodiment works to locate and hold the cartridge before, during, and after the lowering cycle.

To summarise, as the cartridge is inserted into a drive, the leading edge of the cartridge pushes against the "trip arms." After the cartridge has moved a pre-determined distance, the "trip arms" push against the "catch trip." The catch trip engages with the "catch" and pushes it out of the way to release the spring loaded "datum pins." The pins go up and into the datum holes in the cartridge, taking the trip arms with them. As the trip arms go up, they disengage from the catch trip. Once the catch trip is disengaged from the arms, the catch is reset to hold the spring loaded datum pins down once the cartridge is moved onto the spindle motor by the loader mechanism. The trip arms move down with the cartridge, however, they remain disengaged as the presence of the cartridge prevents mechanism reset.

Upon unload, the datum pins are held down by the catch while the cartridge is raised by the loader mechanism. As the cartridge clears the datum pins and reaches the opening in the bezel, it is ejected out. As the cartridge exits the drive, the trip arms are pulled towards the bezel and in front of the catch trip, reset for the next cartridge.

The many benefits of this mechanism include:
1. The drive datum pins move and engage with the cartridge datum holes directly, to hold the cartridge in place during a load cycle.
2. This mechanism is not susceptible to cartridge tolerance build-up in locating it inside the drive.
3. Cartridge datum holes with drive datum pins provide a more positive holding method than holding notches.
4. The mechanism is self resetting. If the mechanism is accidentally tripped, cycling the loader once, will reset it.
5. The mechanism can be adjusted to allow cartridge to travel beyond the datum hole/pin alignment location, so that the drive can be tailored to either manual or machine cartridge loads.
6. The mechanism results in lower cartridge wear because:
   - it releases the datum pin when the pin is under the datum hole, thus preventing the datum pin from rubbing against the cartridge.
   - the cartridge is not forced onto the datum pins due to tolerance build-up between the cartridge holding feature in the loader and the drive datum pins in the drive base.
7. The datum pins have a bullet nose shaped profile to avoid transition from conical to cylindrical region and thus minimise cartridge wear.
8. Tactile feedback to the operator is provided when the spring loaded pins are released to hold the cartridge.
9. The mechanism can be used either on one or both sides of the drive.
10. Low cost, few parts, easy to assemble.
11. The mechanism can be used with any type of media that is contained in a cartridge.

While this invention has been described with respect to a cartridge containing disk media, it should be obvious to a person of skill in the art, that the locating and holding mechanisms of this invention could be utilised with any cartridge having locating holes therein and in which the cartridge is to be lowered onto the spindles of drive motors. Thus, if tape were the media located in the cartridge, the principles and mechanisms of the invention could still be employed, although upon lowering the cartridge it would be lowered upon two spindles, one to supply the tape and one to receive it.

While the invention has been shown and described with reference to a particular embodiment thereof, it will be understood to those skilled in the art, that various changes in form and details may be made therein without departing from the scope of the invention.

## Claims

1. A recording/playback apparatus for use with a standard protective cartridge (8) of the type that holds recording media, the standard cartridge having at least one locating hole (10, 11) at a specific standard dimension from the front edge (14) of the cartridge, the apparatus comprising a base (9), a movable locating pin (30, 31) positioned within and biased away from the base, a tray (70) mounted above the base and having an open entrance into which a protective cartridge may be inserted, means (201) for sensing the position of a cartridge (8) inserted into the tray (70), releasing means (200) connected to the locating pin (30, 31) and responsive to the sensing means (201) for allowing the locating pin (30, 31) to be moved away from the base (9) into the locating hole (10, 11) when the hole is positioned to receive the pin, whereby the cartridge is located and held relative to the base.

2. Apparatus according to claim 1, wherein a movable locating pin (30) has a part (35A) with a recess (50) and a flange (206A), and a spring (206) is located between the flange (206A) and the base (9) to urge the pin upwardly away from the base.

3. Apparatus according to claim 2, wherein the releasing means includes a catch (204, 205) rotatably mounted on the second pin (37) on the base (9), the catch having a lip (205) positioned within the recess (50) to hold the locating pin towards the base.

4. Apparatus according to claim 1, 2 or 3, wherein the sensing means includes a tab (201) on a trip arm (200), the tab extending into the tray (70) so that the edge (14) of a cartridge pushes against tab (201) upon insertion of the cartridge.

5. Apparatus according to claim 4, wherein the movable trip arm (200) is not fixedly connected to the tray (70), the tab (201) being at one end of the arm (200) and extending upwardly through the bottom of the tray into the path of an inserted cartridge (8).

6. Apparatus according to claim 4 or 5, as appendant to claim 3, wherein the catch (204, 205) is operated by a second tab (211) located on the trip arm (200) upon insertion of a cartridge to release the pin to be urged to move away from the base.

7. Apparatus according to claim 6, wherein the distance from the first tab (201) to the second tab (211) determines the trip point for releasing the pin (30, 31) to move into the locating hole (10, 11) in the cartridge (8).

8. Apparatus according to claim 6 or 7, wherein the catch means includes a catch trip (210) rotatably mounted on the second pin (37) on the base (9), positioned relative to the second tab (211) so that the second tab bears against the catch trip (210) to pivot the catch trip upon insertion of the cartridge.

9. Apparatus according to claim 8, wherein the catch trip (210) bears against the surface of the catch (204) to rotate the catch upon insertion of a cartridge to move the lip (205) from the recess (50) to allow the locating pin (30) to move upwardly under the influence of the spring (206) into a locating hole (10) in the cartridge (8) to locate and hold the cartridge relative to the base.

10. Apparatus according to claim 9, wherein the catch trip (210) has a post (212), the second tab (211) bearing against the post (212), until the trip arm (200) is carried by the upward motion of the pin (30) so that the second tab (211) is out of bearing contact with the post (212), and a torsion spring (214) connected to the catch trip to pivot the trip and the post when the post is free of bearing contact with the second tab (211), to allow the trip arm (200) to rest on top of the post (212).

11. Apparatus according to any preceding claim, including means for lowering the tray (70) with a cartridge held by a locating pin therein to depress the locating pin until the bottom surface of the cartridge is positioned solidly against the datum surfaces.

12. Apparatus according to claim 11, as appendant to claim 9 or 10, wherein during lowering of the cartridge, the lip (205) of the catch (204) enters the recess (50) to hold the locating pin (30) so that, when the tray (70) is raised, the cartridge (8) is able to move away from the pin (30).
